# EUROPÄISCHE PATENTSCHRIFT

(11) **EP 2 158 098 B1**
(45) Veröffentlichungstag und Bekanntmachung des Hinweises auf die Patenterteilung: **16.02.2011**
(21) Anmeldenummer: 08784226.6
(22) Anmeldetag: 16.06.2008
(51) Int. Cl.: B60G 17/02

(54) **FUSSPUNKTVERSTELLUNG FÜR FAHRZEUGFEDERUNGEN**
LOW-END ADJUSTING MECHANISM FOR VEHICLE SUSPENSIONS
DEPLACEMENT DE LA BASE DE RESSORTS DE SUSPENSION DE VEHICULES

(30) Priorität: 20.06.2007 DE 202007008749 U
(43) Veröffentlichungstag der Anmeldung: 03.03.2010
(73) Patentinhaber: Asturia Automotive Systems AG, 80538 München (DE)
(72) Erfinder: FREUND, Wolfgang, 08428 Langenbernsdorf (DE); LEZOCK, Daniel, 09488 Thermalbad Wiesenbad (DE); KISSLER, Andreas, 08451 Crimmitschau (DE); SCHULZE, Jürgen, 09122 Chemnitz (DE)
(74) Vertreter: Rumrich, Gabriele
(86) Internationale Anmeldenummer: PCT/DE2008/001021
(87) Internationale Veröffentlichungsnummer: WO 2008/154911

(56) Entgegenhaltungen:
- EP-A- 1 627 756
- DE-A1- 3 718 390
- DE-A1- 10 144 111
- DE-A1-102005 059 147
- DE-B3- 10 245 457
- DE-C1- 19 755 656
- DE-U1-202005 006 545
- JP-A- 7 139 519
- US-A- 3 767 181
- US-A- 3 858 902
- US-A- 4 133 215

## Beschreibung

Die Erfindung betrifft eine Fußpunktverstellung für Fahrzeugfederungen und findet insbesondere für einen Wank- und Nickausgleich sowie einen Niveauausgleich Anwendung.

Aus DE 101 01 694 C5 ist eine Fahrzeugfeder bekannt, welche einen Federträger zur Abstützung einer zwischen zwei Federteilen verspannten Wendelfeder und einem, ein Dämpferrohr und eine am Fahrzeug angebundene Kolbenstange umfassenden, Schwingungsdämpfer aufweist. Dabei sind ein Teil der Kolbenstange und/oder des Dämpferrohres innerhalb der Wendelfeder angeordnet und mindestens ein Federteller ist mittels einer Antriebseinheit mit Elektromotor und Getriebe axial verstellbar. Der Elektromotor ist dabei als Ringmotor mit einem außen liegenden Stator und einem innen liegenden Rotor ausgebildet. Der Rotor trägt innenseitig eine Bewegungsmutter, die einen außen als Gewindespindel ausgebildeten und mit dem Federteller verbundenen Federtellerträger axial verstellt. Der Federtellerträger weist einen mit einer zentralen Öffnung versehenen Boden auf, gegen den sich der Federteller stützt. Damit wird eine elektromechanische Einrichtung zur Lageverstellung des Fahrzeug-Aufbaus geschaffen, da an jedem Federbein eine automatische Höhenverstellung realisiert werden kann und das Fahrzeug bei Kurvenfahrt, Bremsen bzw. Beschleunigen in die Horizontale bewegt (horizontiert) wird.

Ein Fahrzeugfahrwerk mit einem Federträger zur Abstützung einer zwischen zwei Federtellern verspannten Wendelfeder und einem Schwingungsdämpfer wird in DE 102 55 764 B3 beschrieben. Hier ist ebenfalls ein Bereich der Kolbenstange und/oder des Dämpferrohres innerhalb der Wendelfeder angeordnet. Mindestens ein Federteller ist mittels einer Antriebseinheit in Form eines Getriebes, das aus einem Ring-Elektromotor und aus einer Gewindespindel und Gewindeschraube gebildet wird, axial verstellbar. Zumindest ein Teil der Gewindespindel ist einerseits radial innerhalb der Wendelfeder und andererseits radial im Bereich der radialen Erstreckung des Ring-Elektromotors vorgesehen.

In dem Dokument US 3,767,181 A wird eine Fußpunktverstellung für Fahrzeugfederungen beschrieben, wobei Fahrzeugfeder zwischen zwei Federaufnahmen in einem Gehäuse angeordnet ist und eine der Federaufnahmen in Richtung der Federlängsachse verstellbar ist. Die Verstellung erfolgt über aneinandergereihte und an beiden Enden schwenkbar gelagerte Koppelelemente, wodurch das System relativ instabil ist.

Eine elektromechanische Niveauregulierung eines Kraftfahrzeuges wird in DE 101 44 111 A1 beschrieben. Dazu wird eine Anlagestelle einer Feder mittels eines Elektroantriebes gegenüber dem Fahrzeugaufbau verstellt.

Aus den Druckschriften DE 20 2005 006 545 U1 und US 4,133,215 A sind Lösungen bekannt, bei welchen ein beidseitig druckbeaufschlagbarer Kolben in einem Gehäuse angeordnet und an einer Seite mit gelenkig gelagerten Koppelstangen verbunden ist, die an ihrer entgegen gesetzten Seite mit dem Gehäuse verbunden sind. Der Kolben vollführt dadurch bei Druckbeaufschlagung in dem Gehäuse eine axiale Bewegung, die von einer Drehbewegung überlagert wird. Diese Lösung wird bei DE 20 2005 006 545 U1 zur Verstellung eines Aktuators eines Fahrzeuges und bei US 4,133,215 A zur Verstellung eines Ventils eingesetzt.

Eine weitere Lösung zur Federfußpunktverschiebung ist aus DE 10 2006 056 632 A1 bekannt. Danach sind die Abstützpunkte der Tragfedem sowie die Enden des Querstabilisators individuell verstellbar. Die Abstützpunkte der Tragfedern werden dabei mittels Aktuatoren individuell verstellt. Die konstruktive Ausbildung der Aktuatoren ist aus dieser Druckschrift jedoch nicht entnehmbar.

Die bekannten Systeme weisen einen zu groß dimensionierten und komplizierten Aufbau auf und besitzen im eingeregelten Zustand keine Selbsthemmung

Aufgabe der Erfindung ist es, eine Fußpunktverstellung für Fahrzeugfederungen zu entwickeln, die insbesondere für einen Wank- und Nickausgleich sowie einen Niveauausgleich Anwendung finden kann, einen einfachen Aufbau bei geringen Bauraum aufweist, funktionssicher mit Selbsthemmung im eingeregelten Zustand sowie energieeffizient arbeitet und bei einer Höhenverstellung mit zunehmender Federkraft das erforderliche Drehmoment konstant hält bzw. verringert.

Diese Aufgabe wird mit den kennzeichnenden Merkmalen des ersten Schutzanspruchs gelöst, vorteilhafte Ausgestaltungen ergeben sich aus den Unteransprüchen.

Bei der erfindungsgemäßen Fußpunktverstellung für Fahrzeugfederungen, ist eine, eine Federlängsachse aufweisende, Fahrzeugfeder zwischen zwei Federaufnahmen befestigt, wobei wenigstens eine Federaufnahme in Richtung der Federlängsachse über stabförmige, an beiden Enden gelenkig gelagerte Koppelelemente, verstellbar ist.

Dabei nehmen die stabförmigen Koppelelemente eine räumliche Winkelstellung einnehmen und stehen mit ihrem ersten Ende mit der Federaufnahme über ein erstes Befestigungselement in Wirkverbindung und sind mit ihrem zweiten Ende an einem zweiten Befestigungselement gelagert so dass die Federaufnahme durch eine Relativdrehung zwischen ersten und zweiten Befestigungselement in Richtung zur Längsachse der Feder verstellbar ist.

Die Einleitung der Drehbewegung kann dabei beispielsweise mittels eines Schneckenantriebes erfolgen.

Vorzugsweise sind das erste oder zweite Befestigungselement axial verschiebbar und verdrehfest und das jeweils andere Befestigungselement axial fixiert und drehbar gelagert.

Neben der vorgenannt beschriebenen Ausführungsform ist es möglich, dass das erste Befestigungselement zweiteilig in Form eines inneren Elementes und eines äußeren Elementes ausgebildet ist. In diesem Fall ist ein erster Satz Koppelelemente mit dem ersten Ende der Koppelelemente am inneren Element und ein zweiter Satz Koppelelemente mit dem ersten Ende am äußeren Element gelagert. Die zweiten Enden des ersten und zweiten Satzes der Koppelelemente sind am zweiten Befestigungselement auf gleichen oder unterschiedlichen Teilkreisen angeordnet.

Alternativ kann auch das zweite Befestigungselement zweiteilig in Form eines inneren Elementes und eines äußeren Elementes ausgebildet sein, wobei die Befestigung der Koppelelemente analog erfolgt.

In beiden Fällen sind das äußere und das innere Element relativ zueinander drehbar und ein Befestigungselement axialbeweglich und drehbeweglich gelagert ist und das andere Befestigungselement axial fixiert. Dadurch vollführt das dem zweiteiligen Befestigungselement gegenüberliegende Befestigungselement bei Relativdrehung zwischen äußeren und inneren Element eine Hubbewegung in Richtung zur Federlängsachse.

Die dem inneren Element gegenüberliegenden Enden des ersten Satzes der Koppelelemente sind bevorzugt auf einem kleineren Teilkreis angeordnet, als die dem äußeren Element gegenüberliegende Enden des zweiten Satzes der Koppelelemente.

Insbesondere bilden das innere Element und das äußere Element zentrisch angeordnete Ringe, wobei bevorzugt das innere Element und dass äußere Element gegeneinander mittels eines Schneckenantriebes verdrehbar sind.

Dabei können z.B. das innere Element und dass äußere Element gegeneinander mittels eines dazwischen angeordneten Zahnrades verdreht werden, welches in eine Außenverzahnung des Innenringes und eine Innenverzahnung des Außenringes eingreift.

Dieses Zahnrad kann wiederum insbesondere mittels eines Schneckengetriebes antreibbar sein.

Die Koppelelemente werden vorteilhafter Weise am ersten und zweiten Befestigungsteil an beiden Enden kugelgelenkartig gelagert.

Die Federaufnahme ist vorzugsweise in Form eines napfartigen Federtellers ausgebildet. Die Koppelelemente sind zumindest teilweise im Innenraum der Feder angeordnet. Die Feder ist insbesondere eine Wendelfeder.

Mit der Erfindung wird eine vollkommen neue Generation von elektromechanischen Federfußpunktverstellungen geschaffen. Die Fußpunktverstellung erfolgt erstmalig über an beiden Enden gelenkig gelagerte Koppelelemente, wobei ein mit der Fußpunktaufnahme (dem Federteller) der Feder verbundenes Befestigungselement zur Übertragung der Reaktionskräfte dient, die über das andere Befestigungselement und die Koppelelemente eingeleitete werden.

Es wird eine kleinere, leichtere, agilere und dabei robustere Bauform eines Fahrzeugfederwerkes möglich und eine zuverlässige Funktionsweise gewährleistet.

Die am ersten und zweiten Befestigungselement befestigten Koppelelemente verändern bei einer relativen Drehbewegung zwischen ersten und zweiten Befestigungselement ihre räumliche Winkelstellung, wodurch eine Hubbewegung erzeugt und der Fußpunkt der Feder verstellt wird. Damit ist es unter anderem möglich, die Federkraft zu verändern.

Die Reaktions- und Schaltzeiten werden mit der neuartigen Lösung im Vergleich zu herkömmlichen Systemen ebenfalls verbessert. Durch die neuartige Verstellmöglichkeit jedes Federbeins werden bei der Fahrt auftretenden Wank- und Nickbewegungen (Aufbaubewegungen) eines Fahrzeuges schnell und effizient ausgeglichen. Weiterhin ist die Aufbaulage des Fahrzeuges verstellbar, z.B. wenn das Fahrzeug stark beladen wird. Dann kann durch die Federfußpunktverstellung der Aufbau des Fahrzeuges unabhängig von der Beladung in einer gewünschten Position gehalten werden.

Die Erfindung wird nachfolgend anhand von Ausführungsbeispielen und zugehörigen Zeichnungen näher erläutert. Es zeigen:

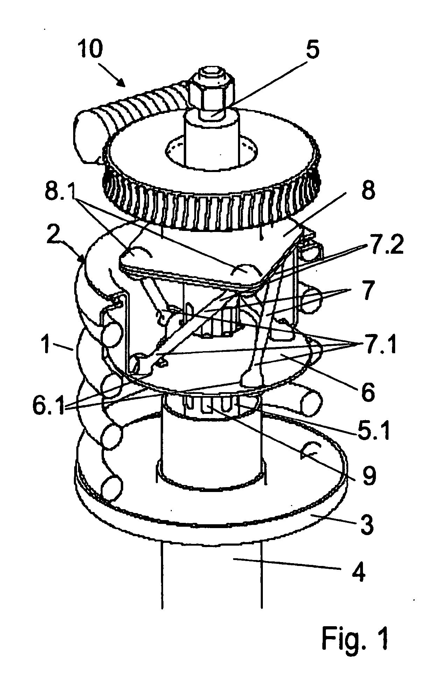

- Fig. 1:: Fußpunktverstellung für Fahrzeuge, wobei das erste Befestigungselement axial verschiebbar und verdrehfest gelagert und mit dem napfförmigen Federteller einer Wendelfeder gekoppelt ist und das zweite Befestigungselement über ei- nen Schneckenantrieb antreibbar ist, wobei zwischen dem ersten und zweiten Befestigungselement Koppelelemente angeordnet sind,

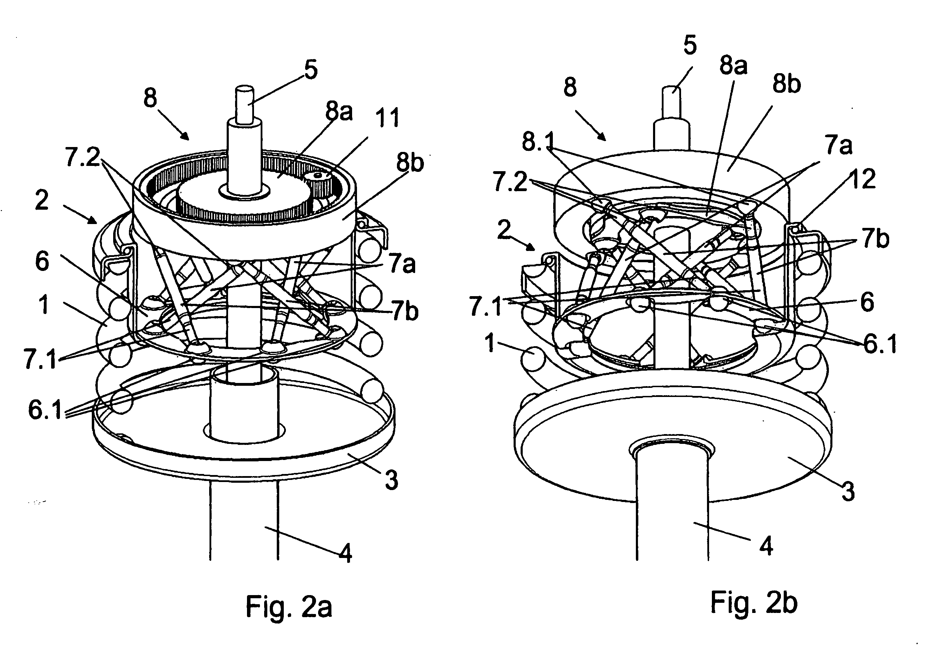

- Fig. 2a und 2b:: Fußpunktverstellung für Fahrzeuge, wobei das erste Befestigungs- element axial verschiebbar und drehbar gelagert und mit dem napfförmigen Federteller einer Wendelfeder gekoppelt ist und das zweite Befestigungsele- ment ein inneres Element und ein äußeres Element aufweist und zwei Sätze von Koppelelementen vorgesehen sind, die jeweils am ersten Ende im ersten Befestigungselement gelagert sind, wobei der erste Satz von Koppelelementen mit ihrem zweiten Ende am inneren Element und der zweite Satz von Koppel- elementen mit ihrem zweiten Ende am äußeren Element des zweiten Befesti- gungselementes kugelgelenkartig gelagert sind.

In Figur 1 ist eine Fußpunktverstellung der Feder 1 eines Fahrzeugfahrwerkes dargestellt. Dabei ist eine Feder 1 in Form einer Wendelfeder vorgesehen. Die Wendelfeder stützt sich mit jedem Ende an einem Federteller 2, 3 ab. Zentral innerhalb der Feder 1 (Wendelfeder) sitzt ein Stoßdämpfer 4 mit einer Kolbenstange 5. Der Stoßdämpfer 4 wird an seinem nicht dargestellten anderen Ende an der Radaufhängung befestigt. Das erste Befestigungselement 6 ist axial verschiebbar und verdrehfest gelagert und mit dem napfförmigen Federteller 2 der Feder 1 (Wendelfeder) gekoppelt und das zweite Befestigungselement 8 ist über einen Schneckenantrieb 10 antreibbar ist, wobei zwischen dem ersten und zweiten Befestigungselement 6, 8 Koppelelemente 7 angeordnet sind. Der oben liegende Federteller 2 ist napfförmig ausgebildet. Den Boden des Napfes bildet das erstes Befestigungselement 6. In dem ersten Befestigungselement 6 sind Lagerungen 6.1 für die ersten kugelförmigen Enden 7.1 der Koppelelemente 7 vorgesehen. Die zweiten kugelförmigen Enden 7.2 der Koppelelemente 7 sind in dem zweiten Befestigungselement 8 in Lagerungen 8.1 kugelgelenkförmig gelagert. Die Koppelelemente 7 nehmen eine räumliche Winkelstellung ein.

Das erste Befestigungselement 6 ist auf einem die der Kolbenstange 5 umgreifenden Führungselement 5.1 mittels einer Längsverzahnung 9 axial beweglich und drehfest gelagert. Das zweite Befestigungselement 8 ist über ein Schneckengetriebe 10 drehbar und axial feststehend gelagert.

Wird mittels des Schneckengetriebes 10 eine Drehbewegung des zweiten Befestigungselementes 8 erzeugt, so wird die räumliche Winkelstellung (Neigungswinkel α) der Koppelelemente 7 verändert und durch die Längsverzahnung 9 eine Hubbewegung des ersten Befestigungselementes 6 und somit des oberen Federtellers 2 bewirkt. Bei einem kleiner werdenden Neigungswinkel α der Koppelelemente 7 wird eine Hubbewegung des Federtellers 2 nach oben vollführt. Bei größer werdendem Neigungswinkel a der Koppelelemente 7 bewegt sich der Federteller 2 nach unten.

Dabei ist von Vorteil, dass die erforderliche Drehkraft mit zunehmender Federkraft sinkt.

Im Ausführungsbeispiel gem. Fig. 1 sind 4 Koppelstangen vorgesehen. Es können je nach Anwendungsfall auch weniger (mindestens eine) oder mehr Koppelelemente eingesetzt werden.

In Fig. 2a in der dreidimensionalen Ansicht von oben und in Fig. 2b in der dreidimensionalen Ansicht von unten wird eine Fußpunktverstellung für Fahrzeuge gezeigt, wobei im Unterschied zu Fig. 1 das erste Befestigungselement 6 axial verschiebbar und drehbar gelagert ist. Das erste Befestigungselement 6 ist wie in Fig. 1 mit dem napfförmigen hier oben liegenden Federteller 2 der Feder 1 (Wendelfeder) gekoppelt. Ebenfalls im Unterschied zu Fig. 1 weist das zweite Befestigungselement 8 ein inneres Element 8a und ein äußeres Element 8b auf. Die beiden Elemente 8a, 8b sind konzentrisch und axial feststehend sowie drehbeweglich an der Kolbenstange 5 des Kolbens 5 befestigt. Es sind zwei Sätze von Koppelelementen 7a und 7b vorgesehen, die jeweils an ihrem ersten Ende 7.1 am ersten Befestigungselement 6 gelagert sind. Der erste Satz von Koppelelementen 7a ist mit den zweiten Enden 7.2 der Koppelelemente 7a am inneren Element 8a und der zweite Satz von Koppelelementen 7b mit den zweiten Enden 7.2 der Koppelelemente 7b am äußeren Element 8b des zweiten Befestigungselementes 8 kugelgelenkarfig gelagert. Das innere Element 8a und dass äußere Element 8b des zweiten Befestigungselementes 8 sind gegeneinander mittels eines dazwischen angeordneten Zahnrades 11 verdrehbar. Das Zahnrad 11 greift dazu in eine nicht näher bezeichnete Außenverzahnung des Innenringes (inneres Element 8a) und eine Innenverzahnung des Außenringes (äußeres Element 8b) ein. Der Antrieb des Zahnrades 11 kann beispielsweise über ein nicht dargestelltes Schneckengetriebe erfolgen.

Die Koppelelemente 7a des ersten Satzes weisen zu den Koppelelementen 7b des zweiten Satzes eine entgegengesetzte Neigungsrichtung auf. Werden das innere Element 8a und das äußere Element 8b gegeneinander mittels des Zahnrades 11 verdreht, so verringert bzw. vergrößert sich der Neigungswinkel der Koppelelemente 7a, 7b. Die Reaktionskraft wird auf das erste Befestigungselement 6 und somit auf den Federteller 2 übertragen, wodurch dieser eine Hubbewegung und eine Drehbewegung vollführt. Daher ist zwischen dem Federteller 2 und der Feder 1 eine Kugellagerung 12 vorgesehen. Es werden in dieser Ausführungsform in jedem Satz vier Koppelelemente 7a, 7b eingesetzt, die jeweils abwechselnd angeordnet sind. Es können auch weniger oder mehr Koppelelemente verwendet werden.

Im Vergleich zu der Ausführungsvariante gem. Fig. 1 wird mit der Ausführungsform gem. Fig. 2 nur das halbe Drehmoment benötigt.

Sowohl bei der Ausführung gem. Fig. 1 als auch bei der Ausführung gem. Fig. 2a/2b sind die Kolbenstange 5 und das zweite Befestigungselement 8 karosseriefest angeordnet, wobei jedoch die Drehbeweglichkeit des zweiten Befestigungselementes 8 zu gewährleisten ist. Der untere Federteller 3 ist am nicht näher bezeichneten Dämpferrohr des Stoßdämfers 4 befestigt.

## Patentansprüche

1. Fußpunktverstellung für Fahrzeugfederungen, wobei eine, eine Federlängsachse aufweisende, Fahrzeugfeder (1) zwischen zwei Federaufnahmen befestigt ist und wenigstens eine Federaufnahme in Richtung der Federlängsachse über stabförmige, an beiden Enden gelenkig gelagerte Koppelelemente (7, 7a, 7b), verstellbar ist, **dadurch gekennzeichnet, dass** die stabförmigen Koppelelemente (7, 7a, 7b) eine räumliche Winkelstellung einnehmen und mit ihrem ersten Ende (7.1) mit der Federaufnahme über ein erstes Befestigungselement in Wirkverbindung stehen und mit ihrem zweiten Ende (7.2) an einem zweiten Befestigungselement (8, 8b) gelagert sind und die Federaufnahme durch eine Relativdrehung zwischen ersten und zweiten Befestigungselement in Richtung zur Längsachse der Feder verstellbar ist

2. Fußpunktverstellung nach Anspruch 1, **dadurch gekennzeichnet, dass** die Einleitung der Relativdrehung mittels eines Schneckenantriebes erfolgt.

3. Fußpunktverstellung nach Anspruch 1 oder 2, **dadurch gekennzeichnet, dass** das erste oder zweite Befestigungselement axial verschiebbar und verdrehfest und das jeweils andere Befestigungselement axial fixiert und drehbar gelagert ist.

4. Fußpunktverstellung nach einem der Ansprüche 1 bis 3, **dadurch gekennzeichnet, dass** das erste Befestigungselement zweiteilig in Form eines inneren Elementes und eines äußeren Elementes ausgebildet ist und dass ein erster Satz Koppelelemente mit dem ersten Ende der Koppelelemente am inneren Element und ein zweiter Satz Koppelelemente mit ihrem ersten Ende der Koppelelemente am äußeren Element gelagert sind und dass die zweiten Enden des ersten und zweiten Satzes der Koppelelemente am zweiten Befestigungselement auf gleichen oder unterschiedlichen Teilkreisen angeordnet sind.

5. Fußpunktverstellung nach einem der Ansprüche 1 bis 4, **dadurch gekennzeichnet, dass** das zweite Befestigungselement zweiteilig in Form eines inneren Elementes und eines äußeren Elementes ausgebildet ist und dass ein erster Satz Koppelelemente mit dem zweiten Ende der Koppelelemente am inneren Element und ein zweiter Satz Koppelelemente mit dem zweiten Ende der Koppelelemente am äußeren Element gelagert sind und dass die ersten Enden des ersten und zweiten Satzes der Koppelelemente am ersten Befestigungselement auf gleichen oder unterschiedlichen Teilkreisen angeordnet sind,

6. Fußpunktverstellung nach Anspruch 4 oder 5, **dadurch gekennzeichnet, dass** das äußere und das innere Element relativ zueinander drehbar sind und ein Befestigungselement axialbeweglich und drehbeweglich gelagert ist und das andere Befestigungselement axial fixiert ist, so dass das dem zweiteiligen Befestigungselement gegenüberliegende Befestigungselement bei Relativdrehung des inneren und äußeren Elementes eine Hubbewegung in Richtung zur Federlängsachse vollführt.

7. Fußpunktverstellung nach einem der Ansprüche 4 bis 6, **dadurch gekennzeichnet, dass** die dem inneren Element gegenüberliegenden Enden des ersten Satzes der Koppelelemente auf einem kleineren Teilkreis angeordnet sind als die dem äußeren Element gegenüberliegende Enden des zweiten Satzes der Koppelelemente.

8. Fußpunktverstellung nach einem der Ansprüche 4 bis 7, **dadurch gekennzeichnet, dass** das innere Element und das äußere Element zentrische Ringe bilden.

9. Fußpunktverstellung nach einem der Ansprüche 4 bis 8, **dadurch gekennzeichnet, dass** das innere Element und dass äußere Element gegeneinander mittels eines Schneckenantriebes verdrehbar sind.

10. Fußpunktverstellung nach einem der Ansprüche 4 bis 9, **dadurch gekennzeichnet, dass** das innere Element und dass äußere Element gegeneinander mittels eines zwischen inneren und äußeren Element angeordneten Zahnrad (Ritzel) verdrehbar sind, welches in eine Außenverzahnung des Innenringes und eine Innenverzahnung des Außenringes eingreift.

11. Fußpunktverstellung nach einem der Ansprüche 4 bis 10, **dadurch gekennzeichnet, dass** das Zahnrad mittels eines Schneckengetriebes antreibbar ist.

12. Fußpunktverstellung nach einem der Ansprüche 1 bis 11, **dadurch gekennzeichnet, dass** das die Koppelelemente an beiden Enden kugelgelenkartig gelagert sind.

13. Fußpunktverstellung nach einem der Ansprüche 1 bis 12, **dadurch gekennzeichnet, dass** die Federaufnahme in Form eines napfartigen Federtellers ausgebildet ist und die Koppelelemente zumindest teilweise im Innenraum der Feder angeordnet sind.

14. Fußpunktverstellung nach einem der Ansprüche 1 bis 13, **dadurch gekennzeichnet, dass** die Feder eine Wendelfeder ist.

## Claims

1. A base-point adjustment for vehicle suspensions, with a vehicle spring (1) having a longitudinal axis of the spring being fastened between two spring receivers (2, 3) and at least one spring receiver being adjustable in the direction of the longitudinal axis of the spring via rod-like coupling elements (7, 7a, 7b) which are held in an articulated manner at both ends, **characterized in that** the rod-like coupling elements (7, 7a, 7b) assume a spatial angular position and are in operative connection with their first end (7.1) with the spring receiver via a first fastening element (6) and are mounted with their second end (7.2) on a second fastening element (8, 8b), and the spring receiver is adjustable by a relative rotation between the first and second fastening element in the direction towards the longitudinal axis of the spring.

2. A base-point adjustment according to claim 1, **characterized in that** the initiation of the relative rotation occurs by means of a worm drive.

3. A base-point adjustment according to claim 1 or 2, **characterized in that** the first or second fastening element is axially displaceable and torsionally rigid, and the respective other fastening element is axially fixed and rotatably held.

4. A base-point adjustment according to one of the claims 1 to 3, **characterized in that** the first fastening element is arranged in two parts in form of an inner element and an outer element, and that a first set of coupling elements is mounted with the first end of the coupling elements on the inner element and a second set of coupling elements is mounted with its first end of coupling elements on the outer element, and that the second ends of the first and second set of the coupling elements are arranged on the second fastening element on the same or different pitch circles.

5. A base-point adjustment according to one of the claims 1 to 4, **characterized in that** the second fastening element is arranged in two parts in form of an inner element and an outer element, and that a first set of coupling elements is mounted with the second end of the coupling elements on the inner element and a second set of coupling elements is mounted with the second end of the coupling elements on the outer element, and that the first ends of the first and second set of the coupling elements are arranged on the first fastening element on the same or different pitch circles.

6. A base-point adjustment according to claim 4 or 5, **characterized in that** the outer and inner element are rotatable relative to one another and one fastening element is held in an axially and rotatably movable manner and the other fastening element is axially fixed, so that the fastening element opposite the two-part fastening element performs a lifting movement in the direction towards the longitudinal axis of the spring during a relative rotation of the inside and outer element.

7. A base-point adjustment according to one of the claims 4 to 6, **characterized in that** the ends of the first set of the coupling elements which are opposite the inner element are arranged on a smaller pitch circle than the ends of the second set of coupling elements which are opposite of the outer element.

8. A base-point adjustment according to one of the claims 4 to 7, **characterized in that** the inner element and the outer element form centric rings.

9. A base-point adjustment according to one of the claims 4 to 8, **characterized in that** the inner element and the outer element are twistable against one another by means of a worm drive.

10. A base-point adjustment according to one of the claims 4 to 9, **characterized in that** the inner element and the outer element are twistable against one another by means of a gearwheel (pinion) arranged between the inner and outer element, which gearwheel engages in an external toothing of the inner ring and an internal toothing of the outer ring.

11. A base-point adjustment according to one of the claims 4 to 10, **characterized in that** the gearwheel can be driven by means of a worm gear drive.

12. A base-point adjustment according to one of the claims 1 to 11, **characterized in that** the coupling elements are held at both ends in the manner of a ball-and-socket joint.

13. A base-point adjustment according to one of the claims 1 to 12, **characterized in that** the spring receiver is arranged in a form of a cup-like spring plate and the coupling elements are arranged at least partly in the interior space of the spring.

14. A base-point adjustment according to one of the claims 1 to 13, **characterized in that** the spring is a spiral coiled spring.

## Revendications

1. Dispositif de déplacement de la base de ressorts de suspension pour suspensions de véhicules, dans lequel un ressort de véhicule (1) présentant un axe longitudinal de suspension est fixé entre deux logements de ressort (2, 3) et au moins un logement de fixation peut être déplacé dans le sens de l'axe longitudinal de ressort à l'aide d'éléments de couplage en forme de barres (7, 7a, 7b) articulés aux deux extrémités, **caractérisé en ce que** les éléments de couplage en forme de barres (7, 7a, 7b) prennent une position angulaire dans l'espace et sont en liaison active par leur première extrémité (7.1) avec le logement de ressort par l'intermédiaire d'un premier élément de fixation (6) et sont supportés par leur deuxième extrémité (7.2) sur un deuxième élément de fixation (8, 8b) et le logement de ressort peut être déplacé par un mouvement relatif entre le premier élément de fixation et le deuxième dans la direction de l'axe longitudinal du ressort.

2. Dispositif de déplacement de la base de ressorts de suspension selon la revendication 1, **caractérisé en ce que** la rotation relative est provoquée au moyen d'un entraînement à vis sans fin.

3. Dispositif de déplacement de la base de ressorts de suspension selon la revendication 1 ou 2, **caractérisé en ce que** le premier ou le deuxième élément de fixation est mobile dans le sans axial et fixe en rotation et l'autre élément de fixation est fixé dans le sens axial et supporté avec possibilité de rotation.

4. Dispositif de déplacement de la base de ressorts de suspension selon l'une des revendications 1 à 3, **caractérisé en ce que** le premier élément de fixation est conçu en deux parties sous la forme d'un élément interne et d'un élément externe et **en ce qu'**un premier jeu d'éléments de couplage est supporté par la première extrémité des éléments de couplage sur l'élément interne et un deuxième jeu d'éléments de couplage par la première extrémité de ses éléments de couplage sur l'élément externe et **en ce que** les deuxièmes extrémités du premier jeu d'éléments de couplage et du deuxième sont disposées sur des segments de cercle identiques ou différents.

5. Dispositif de déplacement de la base de ressorts de suspension selon l'une des revendications 1 à 4, **caractérisé en ce que** le deuxième élément de fixation est conçu en deux parties sous la forme d'un élément interne et d'un élément externe et **en ce qu'**un premier jeu d'éléments de couplage est supporté par la deuxième extrémité des éléments de couplage sur l'élément interne et un deuxième jeu d'éléments de couplage par la deuxième extrémité de ses éléments de couplage sur l'élément externe et **en ce que** les premières extrémités du premier jeu d'éléments de couplage et du deuxième sont disposées sur des segments de cercle identiques ou différents.

6. Dispositif de déplacement de la base de ressorts de suspension 4 ou 5, **caractérisé en ce que** les éléments interne et externe sont capables de rotation l'un par rapport à l'autre et un élément de fixation est supporté de manière mobile dans le sens axial ou mobile en rotation et l'autre élément de fixation est fixe dans le sens axial, de sorte que l'élément de fixation faisant face à l'élément de fixation en deux parties exécute, lors de la rotation relative des éléments interne et externe, un mouvement de levée en direction de l'axe longitudinal du ressort.

7. Dispositif de déplacement de la base de ressorts de suspension selon l'une des revendications 4 à 6, **caractérisé en ce que** les extrémités du premier jeu d'éléments de couplage faisant face à l'élément interne sont disposées sur un plus petit segment de cercle que les extrémités du deuxième jeu d'éléments de couplage faisant face à l'élément externe.

8. Dispositif de déplacement de la base de ressorts de suspension selon l'une des revendications 4 à 7, **caractérisé en ce que** l'élément interne et l'élément externe forment des bagues centrées.

9. Dispositif de déplacement de la base de ressorts de suspension selon l'une des revendications 4 à 8, **caractérisé en ce que** l'élément interne et l'élément externe peuvent être entraînés en rotation l'un par rapport à l'autre au moyen d'un entraînement à vis sans fin.

10. Dispositif de déplacement de la base de ressorts de suspension selon l'une des revendications 4 à 9, **caractérisé en ce que** l'élément interne et l'élément externe peuvent pivoter l'un par rapport à l'autre au moyen d'une roue dentée (pignon) disposée entre l'élément interne et l'élément externe, qui se met en prise dans une denture externe de la bague interne et une denture interne de la bague externe.

11. Dispositif de déplacement de la base de ressorts de suspension selon l'une des revendications 4 à 10, **caractérisé en ce que** la roue dentée peut être entraînée au moyen d'un entraînement à vis sans fin.

12. Dispositif de déplacement de la base de ressorts de suspension selon l'une des revendications 1 à 11, **caractérisé en ce que** les éléments de couplage sont supportés selon le mode d'une articulation à rotule aux deux extrémités.

13. Dispositif de déplacement de la base de ressorts de suspension selon l'une des revendications 1 à 12, **caractérisé en ce que** le logement de ressort est conçu comme une rondelle-ressort en cuvette et les éléments de couplage sont au moins partiellement disposés à l'intérieur du ressort.

14. Dispositif de déplacement de la base de ressorts de suspension selon l'une des revendications 1 à 13, **caractérisé en ce que** le ressort est un ressort hélicoïdal.
